## Europäisches Patentamt

## European Patent Office

## Office européen des brevets

(19)

(11) Veröffentlichungsnummer : **0 197 293**
**B1**

(12) **EUROPÄISCHE PATENTSCHRIFT**

(45) Veröffentlichungstag der Patentschrift :
**21.12.88**

(51) Int. Cl.⁴ : **A 01 N 25/04**

(21) Anmeldenummer : **86102761.3**

(22) Anmeldetag : **03.03.86**

(54) **Makroemulsionen.**

(30) Priorität : 12.03.85 DE 3508643
11.04.85 DE 3512917

(43) Veröffentlichungstag der Anmeldung :
**15.10.86 Patentblatt 86/42**

(45) Bekanntmachung des Hinweises auf die Patenterteilung : 21.12.88 Patentblatt 88/51

(84) Benannte Vertragsstaaten :
**AT BE CH DE FR GB IT LI NL SE**

(56) Entgegenhaltungen :
EP—A— 0 111 580
DE—A— 2 805 251
DE—A— 2 924 878
FR—A— 2 452 249
US—A— 4 372 943

(73) Patentinhaber : BAYER AG
**Konzernverwaltung RP Patentabteilung
D-5090 Leverkusen 1 Bayerwerk (DE)**

(72) Erfinder : **Wirth, Wolfgang, Dr.
Hanftalstrasse 34
D-5202 Hennef 1 (DE)**
Erfinder : **Niessen, Heinz Josef, Dr.
Pannenberg 73
D-5060 Bergisch-Gladbach 2 (DE)**
Erfinder : **Klinksiek, Bernd
Obervolbach 10
D-5060 Bergisch-Gladbach 4 (DE)**

**Beschreibung**

Die vorliegende Erfindung betrifft neue Makroemulsionen, ein Verfahren zu deren Herstellung und deren Verwendung zur Bekämpfung von Schädlingen.

Es sind bereits zahlreiche wäßrige Emulsionen von agrochemischen Wirkstoffen bekannt geworden. Derartige Zubereitungen lassen sich zum Beispiel dadurch herstellen, daß man die in Wasser meist unlöslichen Wirkstoffe in einer solchen Menge an organischen Solventien löst und mit einer solchen Menge an Emulgatoren versetzt, daß sich beim Verdünnen dieser Formulierungen mit Wasser auf die Anwendungskonzentrationen ausreichend stabile Emulsionen bilden. Durch die enthaltenen Lösungsmittel ergeben sich für die Konzentrate jedoch häufig Nachteile in Bezug auf die Brennbarkeit, die toxikologischen Eigenschaften, die Pflanzenverträglichkeit und den Geruch.

Bei agrochemischen Wirkstoffen, die bei Einstellung eines bestimmten pH-Wertes durch Wasser nicht hydrolysiert werden, oder die von sich aus gegenüber einer Hydrolyse nicht empfindlich sind, lassen sich die organischen Lösungsmittel oder auch Gemische organischer Solventien bei der Herstellung von Pflanzenschutz-Formulierungen ganz oder zumindest teilweise durch Wasser ersetzen. Bei Zugabe geeigneter Emulgatoren erhält man dabei Mikroemulsionen, also Öl-in-Wasser-Emulsionen, in denen die Ölphase in Form von Tröpfchen mit einem Durchmesser von unter 0,1 μ in der wäßrigen Phase verteilt sind (vgl. EP-OS 0 062 181, EP-OS 0 107 009 und EP-OS 0 107 023). Nachteilig an diesen Mikroemulsionen ist, daß die enthaltenen Wirkstoffe im allgemeinen sehr schnell freigesetzt werden, wodurch die Toxizität der Präparate nicht günstiger, sondern oft sogar ungünstiger ist als bei den Konzentraten, in denen größere Mengen an organischen Lösungsmitteln enthalten sind. Ferner sind derartige Mikroemulsionskonzentrate oft nur in einem engen Temperaturbereich gegen Phasentrennung stabil.

Weiterhin sind auch Makroemulsionen von agrochemischen Wirkstoffen bekannt, also Öl-in-Wasser-Emulsionen, in denen die Ölphase in Form von Tröpfchen mit einem mittleren Durchmesser von 1 bis 200 μ in der wäßrigen Phase verteilt ist. In den bekannten Makroemulsionen sind zur Stabilisierung Zusätze von Verdickungsmitteln vorhanden (vgl. US-PS 4 303 640). Wegen der enthaltenen Verdickungsmittel ist die Viskosität dieser Makroemulsionen allerdings so hoch, daß eine volumetrische Dosierung der Präparate erschwert wird, und daß in den entleerten Behältern erhebliche Restmengen an Pflanzenschutzmitteln verbleiben können.

Schließlich sind auch Öl-in-Wasser-Emulsionen von bestimmten agrochemischen Wirkstoffen bekannt, die Polyvinylalkohol als Stabilisierungsmittel neben herkömmlichen Emulgatoren enthalten (vgl. EP-OS 0 111 580). Die toxikologischen Eigenschaften derartiger Emulsionen, deren mittlere Tröpfchengröße < 1 μ ist, sind jedoch ungünstiger als diejenigen von entsprechenden Emulsionen, in denen nur Polyvinylalkohol als Stabilisierungsmittel vorhanden ist. Insbesondere tritt in manchen Fällen beim Ausbringen der auf die Anwendungskonzentration verdünnten Spritzbrühen eine unerwünschte haut- und schleimhautreizende Wirkung auf.

Es wurden nun neue Makroemulsionen gefunden,

- die 0,0001 bis 30 Gewichtsprozent an mindestens einem festen Pyrethroid,

0,0005 bis 50 Gewichtsprozent an einem aromatischen Verdünnungsmittel,

0,0001 bis 15 Gewichtsprozent Polyvinylalkohol mit einem mittleren Molekulargewicht zwischen 5000 und 60 000 und einem Acetatgruppen-Gehalt zwischen 2 und 30 Mol.-%, gegebenenfalls im Gemisch mit Polyvinylalkohol mit einem mittleren Molekulargewicht zwischen 70 000 und 150 000 und einem Acetatgruppen-Gehalt zwischen 2 und 30 Mol.-%,

sowie Wasser und Säure sowie gegebenenfalls weitere Zusatzstoffe enthalten und

- in denen die Ölphase in Form von Tröpfchen mit einem mittleren Teilchendurchmesser von 0,1 bis 3,0 μ in der wäßrigen Phase verteilt ist.

Weiterhin wurde gefunden, daß sich die erfindungsgemäßen Makroemulsionen dadurch herstellen lassen, daß man

- eine Lösung aus mindestens einem festen Pyrethroid in einem aromatischen Verdünnungsmittel bei Temperaturen zwischen 10 und 30 °C mit einer wäßrigen Lösung versetzt, die zwischen 1 und 25 Gewichtsprozent an Polyvinylalkohol mit einem mittleren Molekulargewicht zwischen 5000 und 60 000 und einem Acetatgruppen-Gehalt zwischen 2 und 30 Mol.-% enthält, sowie gegebenenfalls mit einer wäßrigen Lösung versetzt, die zwischen 1 und 15 Gewichtsprozent an Polyvinylalkohol mit einem mittleren Molekulargewicht zwischen 70 000 und 150 000 und einem Acetatgruppen-Gehalt zwischen 2 und 30 Mol.-% enthält,

- dann die resultierende Emulsion, gegebenenfalls nach vorherigem Versetzen mit Zusatzstoffen, bei Temperaturen zwischen 10 und 70 °C mit einer geeigneten Vorrichtung homogenisiert und

- anschließend mit Säure sowie gegebenenfalls mit weiteren Zusatzstoffen versetzt und mit Wasser auf die gewünschte Konzentration auffüllt.

Schließlich wurde gefunden, daß die erfindungsgemäßen Makroemulsionen sehr gut zur Bekämpfung von Schädlingen eingesetzt werden können.

Es ist als äußerst überraschend zu bezeichnen, daß die erfindungsgemäßen Makroemulsionen weniger haut- und schleimhautreizend sind als entsprechende vorbekannte Emulsionen, die organische Solventien und herkömmliche Emulgatoren enthalten. Unerwartet ist auch, daß die erfindungsgemäßen Formulierungen über einen relativ großen Temperaturbereich hinweg in Bezug auf Wirkstoffabbau, Wirkstoffkristallisation und Entmischung stabil sind.

Die erfindungsgemäßen Makroemulsionen zeichnen sich auch durch eine Reihe von Vorteilen aus. So lassen sie sich in einfacher Weise unter Verwendung von gängigen Hilfsmitteln herstellen. Die Zugabe von Verdickungsmitteln und Emulgatoren ist nicht erforderlich. Ferner besitzen die erfindungsgemäßen Makroemulsionen eine niedrige Viskosität, so daß eine volumetrische Dosierung ohne Schwierigkeiten vorgenommen werden kann. Hervorzuheben sind darüber hinaus auch die günstigen toxikologischen Eigenschaften, die leichte Dispergierbarkeit in Wasser und die sowohl bei niedrigen als auch bei hohen Temperaturen vorhandene gute physikalische Stabilität der erfindungsgemäßen Emulsionen.

Als aktive Komponenten sind in den erfindungsgemäßen Makroemulsionen einer oder mehrere bei Raumtemperatur feste, insektizid und/oder akarizid wirksame Stoffe aus der Klasse der Pyrethroide enthalten. Unter festen Wirkstoffen sind in diesem Zusammenhang auch solche Komponenten zu verstehen, die bei Raumtemperatur semikristallin sind. Beispielhaft genannt seien 2,2-Dimethyl-3-(β,β-dichlorvinyl)-cis/trans-cyclopropancarbonsäure-α-cyano-3'-phenoxy-4'-fluor-benzylester und 2,3,4,5,6-Pentafluorbenzyl-3-(2,2-dichlorvinyl)-2,2-dimethyl-cyclopropancarboxylat.

In den erfindungsgemäßen Makroemulsionen können alle üblichen aromatischen Solventien oder Solventien-Gemische vorhanden sein, die zwischen 100 °C und 290 °C sieden. Bevorzugt in Frage kommen Toluol, Ethylbenzol, Chlorbenzol, Xylole, alkylierte Benzole mit durchschnittlich 9 Kohlenstoffatomen, wie die unter der Bezeichnung Solvesso® bekannten Lösungsmittel-Typen, ferner gegebenenfalls durch Alkyl mit 1 bis 3 Kohlenstoffatomen substituiertes Naphthalin.

Die erfindungsgemäßen Makroemulsionen enthalten Polyvinylalkohol mit einem mittleren Molekulargewicht zwischen 5000 und 60 000, vorzugsweise zwischen 20 000 und 50 000, und einem Acetatgruppen-Gehalt zwischen 2 und 30 Mol.-%, sowie gegebenenfalls Polyvinylalkohol mit einem mittleren Molekulargewicht zwischen 70 000 und 150 000, vorzugsweise zwischen 75 000 und 125 000, und einem Acetatgruppen-Gehalt zwischen 2 und 30 Mol.-%.

Als Beispiele für derartige Polyvinylalkohole seien genannt :

Polyvinylalkohol mit einem mittleren Molekulargewicht von 47 000 und einem Acetatgruppen-Gehalt von 12 Mol.-%, Polyvinylalkohol mit einem mittleren Molekulargewicht von 99 000 und einem Acetatgruppen-Gehalt von 12 Mol.-%, Polyvinylalkohol mit einem mittleren Molekulargewicht von 81 000 und einem Acetatgruppen-Gehalt von 12 Mol.-%, Polyvinylalkohol mit einem mittleren Molekulargewicht von 25 000 und einem Acetatgruppen-Gehalt von 12 Mol.-%, Polyvinylalkohol mit einem mittleren Molekulargewicht von 82 000 und einem Acetatgruppen-Gehalt von 17 Mol.-%, Polyvinylalkohol mit einem mittleren Molekulargewicht von 85 000 und einem Acetatgruppen-Gehalt von 23 Mol.-%, Polyvinylalkohol mit einem mittleren Molekulargewicht von 27 000 und einem Acetatgruppen-Gehalt von 29 Mol.-%, Polyvinylalkohol mit einem mittleren Molekulargewicht von 75 000 und einem Acetatgruppen-Gehalt von 4 Mol.-%.

Der Acetatgruppen-Gehalt stellt jeweils ein Maß für den Verseifungsgrad des aus Polyvinylacetat hergestellten Polyvinylalkohols dar.

Als Säuren, die in den erfindungsgemäßen Makroemulsionen enthalten sind, kommen anorganische und organische Säuren in Betracht. Beispielhaft genannt seien Phosphorsäure, Zitronensäure und Benzoesäure.

Als Zusatzstoffe, die in den erfindungsgemäßen Makroemulsionen enthalten sein können, kommen Farbstoffe, Konservierungsmittel, Entschäumer, Frostschutzmittel, Kristallisationshemmer und Geruchsverbesserungsmittel in Betracht.

Als Farbstoffe seien in diesem Zusammenhang Anthrachinon-, Azo- und Phthalocyanin-Farbstoffe beispielhaft genannt.

Als Beispiele für Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester, p-Nitrophenol und das unter der Bezeichnung Preventol® auf dem Markt befindliche Konservierungsmittel genannt.

Als Entschäumer kommen Siliconöle in Frage.

Als Beispiele für Frostschutzmittel seien Glycerin, Glykol, Harnstoff, Zucker und Polyethylenglykol genannt.

Beispiele für Kristallisationshemmer sind Alkylphenole, die pro Mol mit 1 bis 8 Mol Ethylenoxid kondensiert sind. Speziell genannt sei in diesem Zusammenhang Nonylphenol, das pro Mol mit 2 Mol Ethylenoxid kondensiert ist.

Als Geruchsverbesserungsmittel können Parfümöle eingesetzt werden.

Die erfindungsgemäßen Makroemulsionen enthalten Wasser als kontinuierliche Phase. Handelt es sich um Konzentrate, so ist die Menge an Wasser relativ gering. Im Falle stark verdünnter Emulsionen sind erhebliche Mengen an Wasser enthalten.

In den erfindungsgemäßen Makroemulsionen ist die Ölphase (= disperse Phase) in Form von Tröpfchen in der wäßrigen Phase verteilt. Die Größe der Öltröpfchen kann dabei innerhalb eines bestimmten Bereiches variiert werden.

Im allgemeinen liegt der mittlere Teilchendurchmesser zwischen 0,1 und 3,0 μ, vorzugsweise zwischen 0,4 und 2,5 μ.

In den erfindungsgemäßen Makroemulsionen können die prozentualen Anteile der enthaltenen Komponenten innerhalb größerer Bereiche variiert werden. Der Anteil an Pyrethroid liegt im allgemeinen zwischen 0,0001 und 30 Gewichtsprozent, vorzugsweise zwischen 0,001 und 20 Gewichtsprozent. Der Anteil an aromatischem Verdünnungsmittel beträgt im allgemeinen zwischen 0,0005 und 40 Gewichtsprozent, vorzugsweise zwischen 0,005 und 40 Gewichtsprozent, und der Anteil an Polyvinylalkohol liegt im allgemeinen zwischen 0,0001 und 15 Gewichtsprozent, vorzugsweise zwischen 0,001 und 10 Gewichtsprozent. Säuren sind im allgemeinen in Anteilen von 0,0001 bis 0,5 Gewichtsprozent, vorzugsweise von 0,001 bis 0,1 Gewichtsprozent enthalten. Zusatzstoffe sind gegebenenfalls in Anteilen zwischen 0,01 und 15 Gewichtsprozent, vorzugsweise zwischen 0,1 und 10 Gewichtsprozent enthalten. Der prozentuale Anteil an Wasser in den erfindungsgemäßen Makroemulsionen errechnet sich jeweils als Differenz aus 100 Gewichtsprozent und der Summe der prozentualen Anteile der übrigen Komponenten.

Bei der Herstellung der erfindungsgemäßen Makroemulsionen können vorzugsweise alle diejenigen Komponenten verwendet werden, die bereits im Zusammenhang mit der Beschreibung der erfindungsgemäßen Makroemulsionen vorzugsweise oder beispielhaft genannt wurden.

Polyvinylalkohol wird bei der Durchführung des erfindungsgemäßen Verfahrens im allgemeinen in Form von wäßrigen Lösungen eingesetzt. Die Konzentrationen dieser Lösungen können innerhalb eines bestimmten Bereiches variiert werden. Im allgemeinen verwendet man wäßrige Lösungen, die zwischen 0,1 und 30 Gewichtsprozent, vorzugsweise zwischen 1 und 25 Gewichtsprozent, an Polyvinylalkohol enthalten.

Sowohl in der ersten als auch in der zweiten Stufe des erfindungsgemäßen Verfahrens können die Reaktionstemperaturen innerhalb eines bestimmten Bereiches variiert werden. Bei der Durchführung der ersten Stufe arbeitet man im allgemeinen bei Temperaturen zwischen 10 und 30 °C, vorzugsweise zwischen 15 und 25 °C. Bei der Durchführung der zweiten Stufe arbeitet man im allgemeinen bei Temperaturen zwischen 10 und 70 °C, vorzugsweise zwischen 15 und 65 °C.

Die Homogenisierung erfolgt in der zweiten Stufe des erfindungsgemäßen Verfahrens vorzugsweise mit Hochdruckhomogenisatoren oder Strahldispergatoren. Vorzugsweise arbeitet man mit mehrstufigen Strahldispergatoren, in denen der Druckabfall pro Strahldispergierdüse zwischen 10 und 50 bar liegt. Derartige Strahldispergatoren sind bereits bekannt (vgl. EP-OS 0 101 007).

Bei der Durchführung des erfindungsgemäßen Verfahrens geht man im allgemeinen so vor, daß man

- in der ersten Stufe eine Lösung von mindestens einem festen Pyrethroid in einem aromatischen Verdünnungsmittel bei Temperaturen zwischen 10 °C und 30 °C unter Rühren mit einer oder mehreren wäßrigen Polyvinylalkohol-Lösungen sowie gegebenenfalls mit Zusatzstoffen versetzt,

- dann in einer zweiten Stufe die resultierende Voremulsion bei Temperaturen zwischen 10 °C und 70 °C mit Hilfe einer geeigneten Vorrichtung homogenisiert und

- anschließend mit Säure sowie gegebenenfalls weiteren Zusatzstoffen versetzt und mit Wasser auf die gewünschte Konzentration auffüllt.

Die Mengen der Komponenten werden dabei so gewählt, daß Makroemulsionen entstehen, in denen die Konzentrationen der einzelnen Bestandteile in den oben angegebenen Bereichen liegen.

Die erfindungsgemäßen Makroemulsionen weisen sehr gute insektizide und akarizide Eigenschaften auf. Sie können deshalb zur Bekämpfung von Insekten und Spinnentieren in der Landwirtschaft, im Gartenbau, im Haushalts- und Hygienebereich sowie im veterinärmedizinischen Bereich eingesetzt werden. Ausgenommen sind Anwendungen gemäß Art. 52 (4) EPÜ.

Die erfindungsgemäßen Makroemulsionen können entweder in der zubereiteten Form oder nach vorheriger Verdünnung appliziert werden. Die Aufwandmenge richtet sich dabei nach der Konzentration der Wirkstoffe in der Formulierung und nach der jeweiligen Indikation.

Die Anwendung der erfindungsgemäßen Makroemulsionen erfolgt, gegebenenfalls nach vorheriger Verdünnung, nach den üblichen Methoden, also zum Beispiel durch Spritzen, Sprühen oder Gießen.

Die Herstellung der erfindungsgemäßen Makroemulsionen geht aus den folgenden Beispielen hervor.

Herstellungsbeispiele

Beispiel 1

5 Gewichtsteile 2,2-Dimethyl-3-(β,β-dichlorvinyl)cis/trans-cyclopropancarbonsäure-α-cyano-3'-phenoxy-4'-fluorbenzylester werden in 9 Gewichtsteilen eines unter der Bezeichnung Solvesso 100® bekannten aromatischen Lösungsmittels gelöst. Hierzu gibt man bei Raumtemperatur und unter Rühren 32 Gewichtsteile einer 10 gewichtsprozentigen wäßrigen Lösung eines Polyvinylalkohols mit einem mittleren Molekulargewicht von 47 000 und einem Acetatgruppen-Gehalt von 12 Mol.-% sowie 8 Gewichtsteile einer 10 gewichtsprozentigen wäßrigen Lösung eines Polyvinylalkohols mit einem mittleren Molekulargewicht von 99 000 und einem Acetatgruppen-Gehalt von 12 Mol.-%. Die resultierende Voremulsion wird bei Raumtemperatur mit einem zweistufigen Strahldispergator, bei dem der Druckabfall pro Strahldispergierdüse 40 bar beträgt, homogenisiert. Anschließend füllt man mit entmineralisiertem Wasser und 40 gewichtsprozentiger wäßriger Zitronensäure so auf 100 Gewichtsteile auf, daß der pH-Wert der Emulsion bei 3,5 liegt. Man erhält auf diese Weise eine Makroemulsion, in der die Ölphase in Form von Tröpfchen mit einem mittleren Teilchendurchmesser von 1,3 μ in der wäßrigen Phase verteilt ist.

Die erhaltene Makroemulsion blieb auch nach achtwöchiger Lagerung im Temperaturwechselschrank bei Temperaturen zwischen —15 °C und +30 °C sowie bei +50 °C stabil.

Beispiel 2

Die im Beispiel 1 beschriebene Makroemulsion wird durch weitere Zugabe von Wasser und 40 gewichtsprozentiger wäßriger Zitronensäure so verdünnt, daß eine Makroemulsion entsteht, in welcher der pH-Wert 3,5 beträgt und 0,015 Gewichtsteile an 2,2-Dimethyl-3-(β,β-dichlorvinyl)-cis/trans-cyclopropancarbonsäure-α-cyano-3′-phenoxy-4′-fluor-benzylester enthalten sind.

Die so erhaltene Makroemulsion blieb auch nach achtwöchiger Lagerung im Temperaturwechselschrank bei Temperaturen zwischen -15 °C und +30 °C sowie bei +50 °C stabil.

Beispiel 3

1,66 Gewichtsteile 2,2-Dimethyl-3-(β,β-dichlorvinyl)cis/trans-cyclopropancarbonsäure-α-cyano-3′-phenoxy-4′-fluorbenzylester und 3,33 Gewichtsteile 2,3,4,5,6-Pentafluorbenzyl-3-(2,2-dichlorvinyl)-2,2-dimethylcyclopropancarboxylat werden in 11 Gewichtsteilen eines unter der Bezeichnung Solvesso 100® bekannten aromatischen Lösungsmittels gelöst. Hierzu gibt man bei Raumtemperatur und unter Rühren 77,2 Gewichtsteile einer 10 gewichtsprozentigen wäßrigen Lösung eines Polyvinylalkohols mit einem mittleren Molekulargewicht von 47 000 und einem Acetatgruppen-Gehalt von 12 Mol.-%. Die resultierende Voremulsion wird auf 50 °C aufgeheizt und mit einem zweistufigen Strahldispergator, bei dem der Druckabfall pro Strahldispergierdüse 40 bar beträgt, homogenisiert.

Anschließend füllt man mit entmineralisiertem Wasser und 40 gewichtsprozentiger wäßriger Zitronensäure so auf 100 Gewichtsteile auf, daß der pH-Wert der Emulsion bei 3,5 liegt. Man erhält auf diese Weise eine Makroemulsion, in der die Ölphase in Form von Tröpfchen mit einem mittleren Teilchendurchmesser von 1,1 μ in der wäßrigen Phase verteilt ist.

Die erhaltene Makroemulsion blieb auch nach achtwöchiger Lagerung im Temperaturwechselschrank bei Temperaturen zwischen -15 °C und +30 °C sowie bei +50 °C stabil.

**Patentansprüche**

1. Makroemulsionen, dadurch gekennzeichnet, daß sie

- 0,0001 bis 30 Gewichtsprozent an mindestens einem festen Pyrethroid,

0,0005 bis 50 Gewichtsprozent an einem aromatischen Verdünnungsmittel,

0,0001 bis 15 Gewichtsprozent Polyvinylalkohol mit einem mittleren Molekulargewicht zwischen 5000 und 60 000 und einem Acetatgruppen-Gehalt zwischen 2 und 30 Mol.-%, gegebenenfalls im Gemisch mit Polyvinylalkohol mit einem mittleren Molekulargewicht zwischen 70 000 und 150 000 und einem Acetatgruppen-Gehalt zwischen 2 und 30 Mol.-%,

sowie Wasser und Säure sowie gegebenenfalls weitere Zusatzstoffe enthalten, sowie dadurch, daß

- die Ölphase in Form von Tröpfchen mit einem mittleren Teilchendurchmesser zwischen 0,1 und 3,0 μ in der wäßrigen Phase verteilt ist.

2. Makroemulsionen gemäß Anspruch 1, dadurch gekennzeichnet, daß als feste Pyrethroide 2,2-Dimethyl-3-(β,β-dichlorvinyl)-cis/trans-cyclopropancarbonsäure-α-cyano-3′-phenoxy-4′-fluor-benzylester und/oder 2,3,4,5,6-Pentafluorbenzyl-3-(2,2-dichlorvinyl)-2,2-dimethyl-cyclopropancarboxylat enthalten sind.

3. Makroemulsionen gemäß Anspruch 1, dadurch gekennzeichnet, daß als aromatische Verdünnungsmittel Toluol, Ethylbenzol, Chlorbenzol, Xylole, alkylierte Benzole mit durchschnittlich 9 Kohlenstoffatomen und/oder gegebenenfalls durch Alkyl mit 1 bis 3 Kohlenstoffatomen substituiertes Naphthalin enthalten sind.

4. Makroemulsionen gemäß Anspruch 1, gekennzeichnet durch einen Gehalt an Polyvinylalkohol mit einem mittleren Molekulargewicht zwischen 20 000 und 50 000 und einem Acetatgruppen-Gehalt von 2 bis 30 Mol.-% sowie gegebenenfalls an Polyvinylalkohol mit einem mittleren Molekulargewicht zwischen 75 000 und 125 000 und einem Acetatgruppen-Gehalt von 2 bis 30 Mol.-%.

5. Makroemulsionen gemäß Anspruch 1, dadurch gekennzeichnet, daß als Säuren Phosphorsäure, Zitronensäure und/oder Benzoesäure enthalten sind.

6. Makroemulsionen gemäß Anspruch 1, dadurch gekennzeichnet, daß Farbstoffe, Konservierungsmittel, Entschäumer, Frostschutzmittel, Kristallisationshemmer und/oder Geruchsverbesserungsmittel als Zusatzstoffe enthalten sind.

7. Makroemulsionen gemäß Anspruch 1, dadurch gekennzeichnet, daß die Ölphase in Form von Tröpfchen mit einem mittleren Teilchendurchmesser zwischen 0,4 μ und 2,5 μ in der wäßrigen Phase verteilt ist.

8. Verfahren zur Herstellung von Makroemulsionen, dadurch gekennzeichnet, daß man

- eine Lösung aus mindestens einem festen Pyrethroid in einem aromatischen Verdünnungsmittel bei Temperaturen zwischen 10 und 30 °C mit einer wäßrigen Lösung versetzt, die zwischen 1 und 25 Gewichtsprozent an Polyvinylalkohol mit einem mittleren Molekulargewicht zwischen 5000 und 60 000 und einem Acetatgruppen-Gehalt zwischen 2 und 30 Mol.-% enthält, sowie gegebenenfalls mit einer wäßrigen Lösung versetzt, die zwischen 1 und 15 Gewichtsprozent an Polyvinylalkohol mit einem mittleren Molekulargewicht zwischen 70 000 und 150 000 und einem Acetatgruppen-Gehalt zwischen 2 und 30 Mol.-% enthält,

- dann die resultierende Emulsion, gegebenenfalls nach vorherigem Versetzen mit Zusatzstoffen, bei Temperaturen zwischen 10 und 70 °C mit einer geeigneten Vorrichtung homogenisiert und

- anschließend mit Säure sowie gegebenenfalls mit weiteren Zusatzstoffen versetzt und mit Wasser auf die gewünschte Konzentration auffüllt.

9. Verwendung von Makroemulsionen gemäß Anspruch 1 zur Bekämpfung von Schädlingen, mit der Ausnahme von Verfahren gem. Art. 52 (4) EPÜ.

**Claims**

1. Macroemulsions, characterised in that they contain
- 0.0001 to 30 % by weight of at least one solid pyrethroid,

0.0005 to 50 % by weight of an aromatic diluent,

0.0001 to 15 % by weight of polyvinyl alcohol having a mean molecular weight of between 5,000 and 60,000 and a content of acetate groups of between 2 and 30 mol%, if appropriate as a mixture with polyvinyl alcohol having a mean molecular weight of between 70,000 and

150,000 and a content of acetate groups of between 2 and 30 mol%,

and water and acid and, if appropriate, further additives,
and that
- the oil phase is dispersed in the aqueous phase in the form of droplets having a mean particle diameter of between 0.1 and 3.0 μm.

2. Macroemulsions according to Claim 1, characterised in that α-cyano-3'-phenoxy-4'-fluoro-benzyl 2,2-dimethyl-3-(β,β-dichlorovinyl)-cis/trans-cyclopropanecarboxylate and/or 2,3,4,5,6-pentafluorobenzyl-3-(2,2-dichlorovinyl)-2,2-dimethyl-cyclopropanecarboxylate are present as solid pyrethroids.

3. Macroemulsions according to Claim 1, characterised in that toluene, ethylbenzene, chlorobenzene, xylenes, alkylated benzenes having an average of 9 carbon atoms and/or naphthalene which is optionally substituted by alkyl having 1 to 3 carbon atoms are present as aromatic diluents.

4. Macroemulsions according to Claim 1, characterised in that they contain polyvinyl alcohol having a mean molecular weight of between 20,000 and 50,000 and a content of acetate groups of 2 to 30 mol% and, if appropriate, polyvinyl alcohol having a mean molecular weight of between 75,000 and 125,000 and a content of acetate groups of 2 to 30 mol%.

5. Macroemulsions according to Claim 1, characterised in that phosphoric acid, citric acid and/or benzoic acid are present as acids.

6. Macroemulsions according to Claim 1, characterised in that dyestuffs, preservatives, antifoams, antifreezes, crystallisation inhibitors and/or odour improvers are present as additives.

7. Macroemulsions according to Claim 1, characterised in that the oil phase is dispersed in the aqueous phase in the form of droplets having a mean particle diameter of between 0.4 μm and 2.5 μm.

8. Process for the preparation of macroemulsions, characterised in that
- an aqueous solution which contains between 1 and 25 % by weight of polyvinyl alcohol having a mean molecular weight of between 5,000 and 60,000 and a content of acetate groups of between 2 and 30 mol%, and, if appropriate, an aqueous solution which contains between 1 and 15 % by weight of polyvinyl alcohol having a mean molecular weight of between 70,000 and 150,000 and a content of acetate groups of between 2 and 30 mol%, are added to a solution of at least one solid pyrethroid in an aromatic diluent at temperatures of between 10 and 30 °C,
- the resulting emulsiom, if appropriate after additives have been added beforehand, is then homogenised at temperatures of between 10 and 70 °C by means of a suitable apparatus, and
- acid and, if appropriate, further additives are then added and the emulsion is made up to the desired concentration with water.

9. Use of macroemulsions according to Claim 1 for combating pests with the exception of processes according to Article 52 (4) EPC.

**Revendications**

1. Macro-émulsions, caractérisées en ce qu'elles contiennent
- 0,0001 à 30 pour cent en poids d'au moins un pyréthroïde solide,

0,0005 à 50 pour cent en poids d'un diluant aromatique,

0,0001 à 15 pour cent en poids d'alcool polyvinylique ayant un poids moléculaire moyen compris entre 5000 et 60 000 et une teneur en groupes acétate comprise entre 2 et 30 moles %, le cas échéant en mélange avec de l'alcool polyvinylique d'un poids moléculaire moyen compris entre 70 000 et 150 000 et à teneur en groupes acétate comprise entre 2 et 30 moles %,

ainsi que de l'eau et un acide de même que, le cas échéant, d'autres additifs, et par le fait que
- la phase d'huile est répartie dans la phase aqueuse sous la forme de gouttelettes d'un diamètre moyen de particules compris entre 0,1 et 3,0 μm.

2. Macro-émulsions suivant la revendication 1, caractérisées en ce qu'elles contiennent comme pyréthroïdes solides de l'ester alpha-cyano-3'-phénoxy-4'-fluorobenzylique d'acide 2,2-diméthyl-3-(β,β-dichlorovinyl)cis/trans-cyclopropanecarboxylique et/ou du 3-(2,2-dichlorovinyl)-2,2-diméthyl-cyclopropanecarboxylate de 2,3,4,5,6-pentafluorobenzyle.

3. Macro-émulsions suivant la revendication 1, caractérisées en ce qu'elles contiennent comme diluants aromatiques du toluène, de l'éthylbenzène, du chlorobenzène, des xylènes, des benzènes alkylés ayant en moyenne 9 atomes de carbone et/ou du naphtalène éventuellement substitué par un radical alkyle ayant 1 à 3 atomes de carbone.

4. Macro-émulsions suivant la revendication 1, caractérisées par une teneur en alcool polyvinylique de poids moléculaire moyen compris entre 20 000 et 50 000 et à teneur en groupes acétate de 2 à 30 moles % ainsi que, le cas échéant, en alcool polyvinylique ayant un poids moléculaire moyen compris entre 75 000 et 125 000 et une teneur en groupes acétate de 2 à 30 moles %.

5. Macro-émulsions suivant la revendication 1, caractérisées en ce qu'elles contiennent comme acides de l'acide phosphorique, de l'acide citrique et/ou de l'acide benzoïque.

6. Macro-émulsions suivant la revendication 1, caractérisées en ce qu'elles contiennent comme additifs des colorants, des agents conservateurs, des agents anti-moussants, des agents de protection contre le gel, des inhibiteurs de cristallisation et/ou des agents améliorant l'odeur.

7. Macro-émulsions suivant la revendication 1, caractérisées en ce que la phase d'huile est répartie dans la phase aqueuse sous la forme de gouttelettes ayant un diamètre moyen de particules compris entre 0,4 et 2,5 µm.

8. Procédé de production de macro-émulsions, caractérisé en ce que :

- on ajoute à une solution d'au moins un pyréthroïde solide dans un diluant aromatique à des températures comprises entre 10 et 30 °C, une solution aqueuse qui contient entre 1 et 25 % en poids d'alcool polyvinylique d'un poids moléculaire moyen compris entre 5000 et 60 000 et ayant une teneur en groupes acétate comprise entre 2 et 30 moles %, ainsi que, le cas échéant, une solution aqueuse qui contient entre 1 et 15 pour cent en poids d'alcool polyvinylique de poids moléculaire moyen compris entre 70 000 et 150 000 et à teneur en groupes acétate comprise entre 2 et 30 moles %,

— ensuite, on homogénéise l'émulsion résultante, éventuellement après addition préalable d'additifs, à des températures comprises entre 10 et 70 °C avec un dispositif approprié, après quoi,

— on ajoute un acide ainsi que, le cas échéant, d'autres additifs et on complète à la concentration désirée avec de l'eau.

9. Utilisation de macro-émulsions suivant la revendication 1 pour combattre des parasites, à l'exception des procédés conformes à l'article 52 (4) de la Convention sur le Brevet Européen.